# EUROPÄISCHE PATENTSCHRIFT

(11) **EP 1 869 969 B1**
(45) Veröffentlichungstag und Bekanntmachung des Hinweises auf die Patenterteilung: **23.10.2013**
(21) Anmeldenummer: 07104911.8
(22) Anmeldetag: 26.03.2007
(51) Int. Cl.: A01F 12/40, A01D 41/12

(54) **Strohhäcksler für einen Mähdrescher**
Chaff chopper for a combine harvester
Système à hacher la paille pour une moissonneuse-batteuse

(30) Priorität: 20.06.2006 DE 102006028706
(43) Veröffentlichungstag der Anmeldung: 26.12.2007
(73) Patentinhaber: CLAAS Selbstfahrende Erntemaschinen GmbH, 33428 Harsewinkel (DE)
(72) Erfinder: Terörde, Stefan, 48231, Warendorf (DE); Niermann, Martin, 33428, Harsewinkel (DE); Dammann, Martin, 33428, Harsewinkel (DE); Holtmann, Bernd, 48324, Sendenhorst (DE); Kucerin, Sergej, 32602, Vlotho (DE)

(56) Entgegenhaltungen:
- WO-A-2005/022980
- DE-A1- 4 313 841
- US-A1- 2003 190 939
- US-A1- 2004 043 804
- US-A1- 2004 132 517

## Beschreibung

Die Erfindung bezieht sich auf einen Strohhäcksler für einen Mähdrescher mit zumindest einem in Längsrichtung angeordneten Dresch- und/oder Axialabscheider, wobei der Strohhäcksler unterhalb des Abgabebereiches des Axialabscheiders quer zur Fahrtrichtung des Mähdreschers angeordnet ist, nach dem Oberbegriff des Patentanspruches 1.

Derartige Strohhäcksler dienen der Zerkleinerung des den Abgabebereich des Axialabscheiders verlassenden Strohs und gemeinsam mit feststehenden oder rotierenden Verteilvorrichtungen der Abgabe des Häckselgutes auf den Feldboden. Sie bestehen aus umlaufenden Messern, die an Halterungen an einer mit einer hohen Drehzahl rotierenden Welle pendelnd befestigt sind. Im Zusammenwirken mit feststehenden Gegenmessern erfolgt der Häckselvorgang des Strohs. Solche Häckselvorrichtungen sind bereits in verschiedenen Ausführungen bekannt. Beispielsweise ist in der WO 2005/022 980 A2 ein Strohhäcksler beschrieben, der einem Axialabscheider eines Mähdreschers nachgeordnet ist. Der Strohhäcksier erstreckt sich dabei über die gesamte Gehäusebreite des Mähdreschers. Da bei Mähdreschern mit in Längsrichtung angeordneten Dresch- und Axialabscheidevorrichtungen die Abgabe der Strohbestandteile am Rotorende in einer Auslassbreite erfolgt, die dem Durchmesser des Gehäuses des Axialabscheiders entspricht und damit wesentlich schmaler als die Breite des Strohhäckslers ist, wird der Häcksler in entsprechender Weise über dessen Breite ungleichmäßig beschickt. Ebenso unausgeglichen erfolgt die Abgabe des Häckselgutes auf die nachgeordnete Verteilvorrichtung, so dass dementsprechend auch keine gleichmäßige Quervertellung des Häckselgutes auf dem Feld möglich ist.

Aus der DE 43 13 849 A1 ist ein Strohhäcksler für einen Mähdrescher bekannt, der nach dem Axialflussprinzip arbeitet und hinter dessen Rotor eine Strohleitvorrichtung angeordnet ist, die sich quer zur Längsachse des Mähdreschers erstreckt. Die Strohleitvorrichtung dient dazu, dass von dem Rotor abgegebene Erntegut bei der Zuführung zu dem Strohhäcksler zu vergleichmäßigen, Hierzu weist die Strohleitvorrichtung eine sich Ober die Maschinenbreite erstreckende Koppelstange auf, an der verstellbare Leitvorrichtungen angeordnet sind.

Der Erfindung liegt die Aufgabe zugrunde, die beschriebenen Nachteile des Standes der Technik zu vermeiden und insbesondere einen Strohhäcksler für einen Mähdrescher mit in Längsrichtung verlaufenden Dresch- und/oder Abscheidevorrichtungen so auszuführen und anzuordnen, dass sowohl eine gleichmäßige Strohzuführung zu den Häckselorganen als auch eine ausgeglichene Häckselgutverteilung über die gesamte Schnittbreite des Mähdreschers auf dem Feld erreicht wird.

Diese Aufgabe wird durch die im Patentanspruch 1 genannten kennzeichnenden Merkmale gelöst. Weitere vorteilhafte Ausführungen des Erfindungsgegenstandes ergeben sich aus den nachgeordneten Ansprüchen.

Erfingdungsgemäß sind zwischen dem Abgabebereich des Axialabscheiders und dem Strohhäcksler innerhalb einer Strohauslaufhaube seitliche Leitbleche angeordnet, die obenseitig an in Längsrichtung des Mähdreschers weisenden Schwenkachsen angelenkt sind. Indem die wirksame Arbeitsbreite des Strohhäckslers schmaler als die Gehäusebreite des Mähdreschers ausgeführt ist und an die jeweilige Auslassbreite des Axialabscheiders anpassbar Ist, wird sichergestellt, dass sowohl eine gleichmäßigere Strohzuführung zu den Häckselorganen als auch eine ausgeglichenere Häckselgutverteilung über die gesamte Schnittbreite des Mähdreschers auf dem Feld erreicht wird. Die erfindungsgemäße Lösung ermöglicht zudem durch die Reduzierung der effektiven Breite des Strohhäckslers einen optimalen Gutfluss von der Zufuhr bis zur Abgabe. Die gleichmäßige Häckselgutverteilung auf dem Feld schafft günstige Voraussetzungen für eine anschließende Bodenbearbeitung. Durch eine höhere Erntgutdichte im wirksamen Häckslerbereich sind in Verbindung mit Leiteinrichtungen größere Wurfweiten möglich, die unabhängig von der Gutart und den jeweiligen Erntebedingungen sind.

In einer vorteilhaften Ausgestaltung der Erfindung wird das aus dem Strohabgabebereich des wenigstens einen Axialabscheiders austretende Erntegut zwischen Leitblechen in den Annahmebereich des Strohhäckslers geführt, wobei die Leitbleche lageveränderlich an dem Maschinenrahmen angelenkt sind. Auf diese Weise kann eine sehr flexible Anpassung der Übergabebedingungen zwischen Axialrotor und Strohhäcksler erreicht werden, sodass erntegutspezifisch und auslassbreitenabhängig Anpassungen vorgenommen werden können.

In einer vorteilhaften Weiterbildung der Erfindung entspricht die Abgabebreite der Leitbleche nahezu der wirksamen Arbeitsbreite des Strohhäckslers. Auf diese Weise kann zudem die wirksame Arbeitsbreite des Strohhäckslers flexibel angepasst werden.

Indem dem Mähdrescher mehrere nebeneinander angeordnete Axialabscheider zugeordnet sind und jedem Axialabscheider ein Strohhäcksler zugeordnet ist, kann die erfindungsgemäße Struktur eines Strohhäckslers universell an verschiedensten Mähdreschern mit unterschiedlichster Anzahl von Axialabecheidern eingesetzt werden.

Um ein effizientes und kostengünstiges Antriebssystem einsetzen zu können, ist in einer weiteren vorteilhaften Ausgestaltung der Erfindung vorgesehen, dass die Strohhäcksler auf einer gemeinsamen Antriebswelle angeordnet sind.

In einer weiteren vorteilhaften Ausgestaltung der Erfindung ist die Antriebswelle des oder der Strohhäcksler in dem Maschinenrahmen gelagert und wobei dem einen Strohhäcksler beidseitig oder den mehreren Strohhäckslern an beliebiger Stelle zwischen den Strohhäckslern ein oder mehrere als Saug- und/oder Druckluftgebläse ausgeführte Gebläse zugeordnet sind. Dies hat den Vorteil, dass einerseits eine intensivere Luftabsaugung aus dem Mähdrescher bewirkt werden kann, was letztlich zu einer Entlastung der Reinigungseinrichtung führt. Andererseits kann ein Druckluftstrom generiert werden, der das Austragen und Verteilen des in dem Strohhäcksler zerkleinerten Erntegutes unterstützt.

Die Erfindung wird nachstehend an einem Ausführungsbeispiel näher erläutert. In der zugehörigen Zeichnung zeigen
- Figur 1: eine Längsschnittdarstellung eines Mähdreschers mit einem In Langsrichtung angeordneten Axialabscheider und einem nachgeordneten Strohhäcksler
- Figur 2: die Rückansicht auf den Abgabebereich des Axialabscheiders und den darunter angeordneten Strohhäcksler.

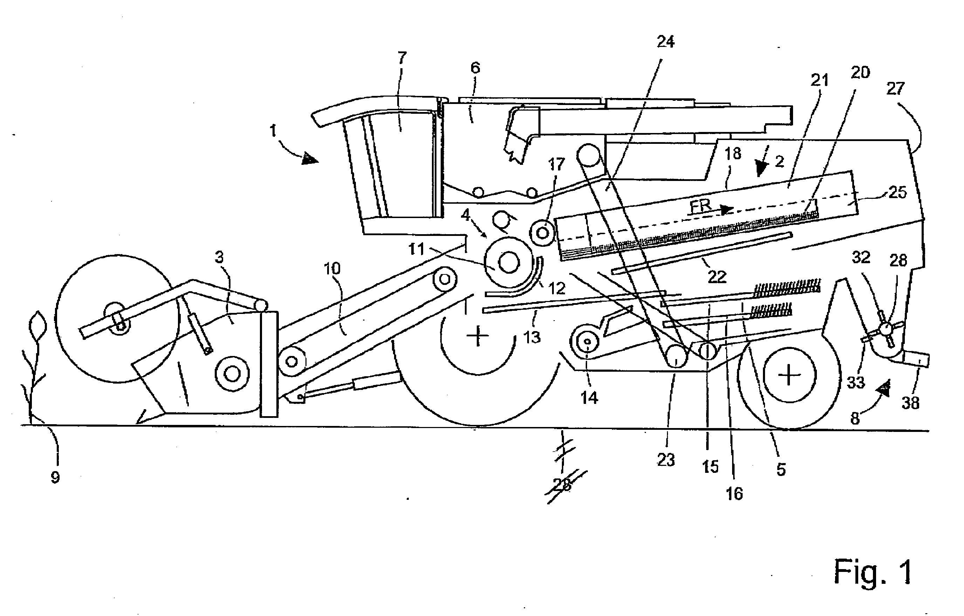

Der in der Fig. 1 schematisch dargestellte Mähdrescher 1 mit einem Axialabscheider 2 besteht im Wesentlichen aus einem Schneidwerk 3, einer Drescheinrichtung 4, einer Reinigungseinchtung 5, einem Korntank 6, einer Fahrerkabine 7 sowie aus einem dem Axialabscheider 2 nachgeordneten Strohhäcksler 8. Das vom Schneidwerk 3 abgeschnittene Erntegut 9 gelangt über einen Schrägförderkanal 10 zu einer nach dem Tangentialprinzip arbeitenden Drescheinrichtung 4. Diese besteht aus einer Dreschtrommel 11 und einem zugeordneten Dreschkorb 12. Die am Dreschkorb 12 abgeschiedenen Erntegutbestandteile werden über einen Förderboden 13 zu einer aus einem Gebläse 14 und einem Ober- und Untersieb 16,16 bestehenden Reinigungseinrichtung 5 geleitet. Das den Dreschkorb 12 in tangentialer Richtung verlassende Korn-Kurzstroh-Gemisch wird in einen Axialabscheider 2 gefördert. Der Fördervorgang wird durch eine parallel zur Dreschtrommel 11 angeordnete, rotierende Wendetrommel 17 unterstützt. Der Axialabscheider 2 ist in Längsrichtung des Mähdreschers 1 angeordnet und besteht im Wesentlichen aus einem feststehenden, in Förderrichtung FR ansteigendem zylindrischem Gehäuse 18, in dem ein drehbar angetriebener Rotor 19 gelagert ist. Das Gehäuse 18 weist einen unteren Bereich mit Abscheidrosten 20 und einen geschlossenen oberen Deckbereich 21 mit an der Innenseite angeordneten Leiteinrichtungen zur Unterstützung der Förderbewegung des Erntegutes auf. Der Umfangsbereich des Rotors 19 ist mit verschiedenartig ausgebildeten Zinken oder Leisten versehen, die den Abscheidevorgang intensivieren. An den Abscheiderosten 20 werden die Im Erntegutgemisch enthaltenen Körner sowie Anteile von Kurzstroh und Spreu abgeschieden und über den darunter liegenden Rücklaufboden 22 zur Reinigungseinrichtung 5 gefördert. Die gereinigten Körner gelangen über eine Förderschnecke 23 und einen Elevator 24 in den Korntank 6. Innerhalb des Axialabscheiders 2 wird das Stroh in Richtung zum Abgabebereich 25 gefördert und gelangt von dort aus über die Auslassbreite 26 verteilt in einen noch näher zu beschreibenden erfindungsgemäßen Strohhäcksler 8, der quer zur Fahrtrichtung an einem Rahmen unterhalb der Strohauslaufhaube 27 befestigt ist. Es liegt im Rahmen der Erfindung, dass die im Ausfüruhrungsbeispiel dargestellte Drescheinrichtung 4 und der ihr im rückwärtigen Bereich zugeordnete Axialabscheider 2 durch einen einzigen, an sich bekannten und deshalb nicht dargestellten Dresch- und Trennrotor ersetzt sein kann.

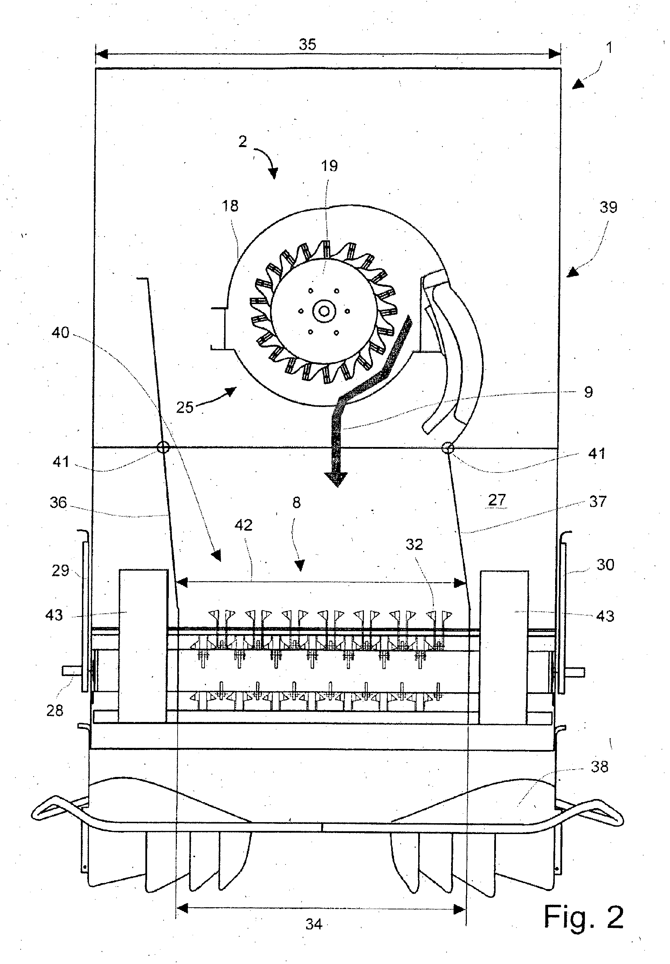

Gemäß Figur 2 entspricht die Auslassbreite 26 des Axialabscheiders 2 etwa dem Durchmesser des Gehäuses 18 des Axialabscheiders 2. Die drehbar angetriebene Antriebswelle 28 des Strohhäckslers 8 ist in Lagern an den Seitenwänden 29,30 im Maschinenrahmen 39 gelagert. An der Antriebswelle 28 sind Halterungen 34 angebracht, an denen jeweils paarweise Messer 32 pendelnd befestigt sind. Diese Messer 32 wirken mit feststehenden Gegenmessern 33 zusammen.

Die Messer 32 und Gegenmesser 33 sind mittig zwischen den beiden Seitenwänden 29,30 in einer Breite angeordnet, die geringer als der Abstand der Seitenwände 29, 30 zueinander ist. Die wirksame Arbeitsbreite 34 des Strohhäcksiers 8 ist somit schmaler als die Gehäusebreite 35 des Mähdreschers 1. Zwischen dem Abgabebereich 25 des Axialabscheiders 2 und dem Strohhäcksler 8 sind innerhalb der Strohauslaufhaube 27 seitliche Leitbleche 36,37 für die Führung des aus dem Axialabscheider 2 austretenden Erntegutes 9 bis zum Annahmebereich 40 des Strohhäckslers 8 angeordnet. Die Leitbleche 36, 37 sind obenseitig an in Längsrichtung des Mähdreschers 1 weisenden Schwenkachsen 41 angelankt. Indem die Leitbleche 36, 37 um die jeweiligen Schwenkachsen 41 verschwenkbar sind, kann die von den Leitblechen 36, 37 aufgespannte Abgabebreite 42 eingestellt werden. Damit entspricht die Abgabebereite 42 der Leitbleche 36, 37 nahezu der wirksamen Arbeitsbreite 34 des Strohhäckslers 8. Damit ist die wirksame Arbeitsbreite 34 des Strohhäckslers 8 an die Auslassbreite des Axialabscheiders 2 anpassbar.

Dem Strohhäcksler 8 ist in der Abwurfrichtung eine Verteilvorrichtung 38 für das gehäckselte Stroh auf dem Feld zugeordnet. Die Vertellvorrichtung 38 kann mit feststehenden oder rotierenden Verteilelementen ausgerüstet sein. An der Antriebswelle 28 des Strohhäckslers 8 kann beidseitig neben dem effektiven Häckselbereich je ein Gebläse 43 angeordnet sein, das einen Saugluftstrom zum Absaugen von Spreu und Kurzstrohteilen oder einen Druckluftstrom zur zusätzlichen Unterstützung der Verteilung des Häckselgutes 9 durch die Vorteilvorrichtung 38 erzeugt.

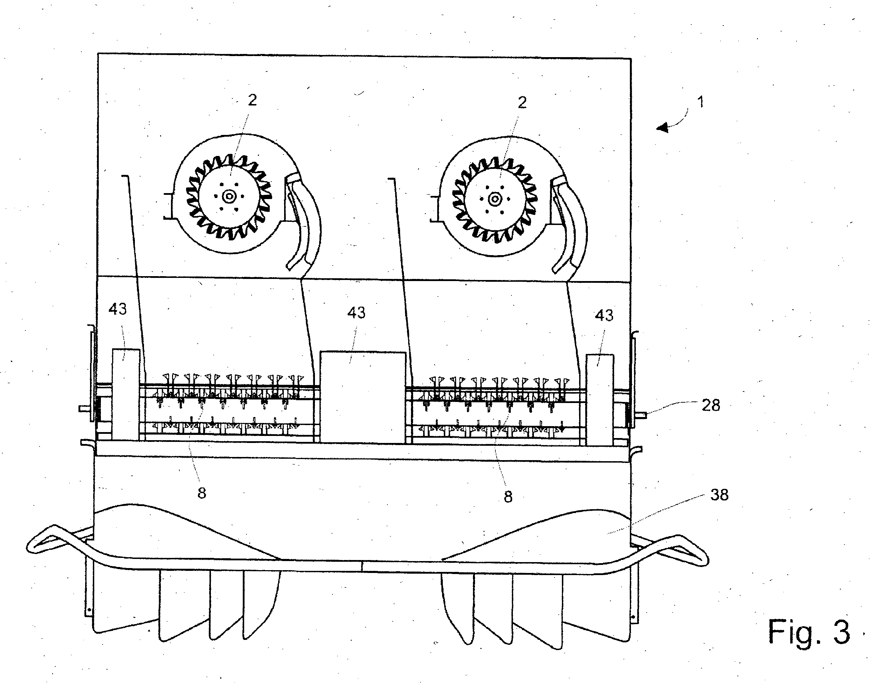

Gemäß Figur 3 kann der Mähdrescher 1 entsprechend der jeweiligen Leistungsklasse sowohl mit einem als auch mit mehreren nebeneinander angeordneten Axialabscheidern 2 ausgerüstet sein. Bei der Anordnung von mehreren Axialabscheidern 2 nebeneinander ist jedem Axialabscheider 2 je ein erfindungsgemäßer Strohhäcksier 8 zugeordnet. Die einzeinen Strohhäcksler 8 sind dabei auf einer gemeinsamen Antriebswelle 28 angeordnet. und den mehreren Strohhäckslern 8 ist zwischen diesen jeweils ein Gebläse 43 zugeordnet, welches einen Saugluftstrom zum Absaugen von Spreu und Kurzstrohteilen oder einen Druckluftstrom zur zusätzlichen Unterstützung der Verteilung des Häckselgutes 9 durch die Verteilvorrichtung 38 erzeugt. Es liegt im Rahmen der Erfindung; dass bei mehreren Axialabscheidern 2 die Anzahl der Gebläse 43, je nach Bedarf, variieren kann, sodass letztlich die Anzahl der Gebläse 43 größer oder kleiner als die Anzahl der Strohhäcksler 8 sein kann.

### Bezugszeichenliste

- 1: Mähdrescher
- 2: Axialabscheider
- 3: Schneidwerk
- 4: Drescheinrichtung
- 5: Reinigungseinrichtung
- 6: Korntank
- 7: Fahrerkabine
- 8: Strohhäcksler
- 9: Erntegut
- 10: Schrägförderkanal
- 11: Dreschtrommel
- 12: Dreschkorb
- 13: Förderboden
- 14: Gebläse
- 15: Obersieb
- 16: Untersleb
- 17: Wendetrommel
- 18: Gehäuse
- 19: Rotor
- 20: Abscheiderost
- 21: Deckbereich
- 22: Rücklaufboden
- 23: Förderschnecke
- 24: Elevator
- 25: Abgabebereich

- 27: Strohauslaufhaube
- 28: Antriebswelle
- 29,30: Seitenwände

- 32: Messer
- 33: Gegenmesser
- 34: Arbeitsbreite
- 35: Gehäusebreite
- 36,37: Leitbleche
- 38: Verteilvorrichtung
- 39: Maschinenrahmen
- 40: Annahmebereich
- 41: Schwenkachse
- 42: Abgabebreite
- 43: Gebläse
- FR: Förderrichtung

## Patentansprüche

1. Strohhäcksler (8) für einen Mähdrescher (1) mit zumindest einem in Längsrichtung angeordnetenDresch- und/oder Axialabscheider (2) wobei der mit Messern (32) und Gegenmessern (33) versehene Strohhäcksler (8) unterhalb des Strohabgabebereiches des Axialabschelders (2) quer zur Fahrtrichtung des Mähdreschers (1) angeordnet ist, wobei die wirksame Arbeitsbreite (34) des Strohhäckslers (8) schmaler als die Gehäusebreite (35) des Mähdreschers (1) ausgeführt ist und an die jeweilige Auslassbreite (26) des Axialabscheiders (2) anpassbar ist, wobei zwischen dem Abgabebereich (25) des Axialabscheiders (2) und dem Strohhäcksler (8) innerhalb einer Strohauslaufhaube (27) seitliche Leitblech (36, 37) angeordnet sind, **dadurch gekennzeichnet, dass** die seitliche Leitbleche (36, 37) obenseitig an in Längsrichtung des Mähdreschers (1) weisenden Schwenkachsen (41) angelenkt sind.

2. Strohhäcksler nach Anspruch 1,
**dadurch gekennzeichnet,**
**dass** das aus dem Abgabebereich (25) des wenigstens einen Axialabscheiders (2) austretende Erntegut (9) zwischen den Leitblechen (36, 37) in den Annahmebereich (40) des Strohhäckslers (8) geführt wird und wobei die Leitbleche (36, 37) lageveränderlich an dem Maschinenrahmen (39) angelenkt sind.

3. Strohhäcksler nach einem der vorhergehenden Ansprüche,
**dadurch gekennzeichnet,**
**dass** die Abgabebreite (42) der Leitbleche (36, 37) nahezu der wirksamen Arbeitsbreite (34) des Strohhäckslers (8) entspricht.

4. Strohhäcksler nach einem der vorhergehenden Ansprüche,
**dadurch gekennzeichnet,**
**dass** dem Mähdrescher (1) mehrere nebeneinander angeordneten Axialabscheider (2) zugeordnet sind und jedem Axialabscheider (2) ein Strohhäcksler (8) zugeordnet ist.

5. Strohhäcksler nach Anspruch 4,
**dadurch gekennzeichnet,**
**dass** die Strohhäcksler (8) auf einer gemeinsamen Antriebswelle (28) angeordnet sind.

6. Strohhäcksler nach einem der vorhergehenden Ansprüche,
**dadurch gekennzeichnet,**
**dass** die Antriebswelle (28) des oder der Strohhäcksier (8) In dem Maschinenrahmen (39) gelagert ist und dem einen Strohhäcksier (8) beidseitig oder den mehreren Strohhäckslern (8) an beliebiger Stelle zwischen den Strohhäckslern (8) ein oder mehrere Gebläse (43) zugeordnet sind.

7. Strohhäcksler nach Anspruch 6,
**dadurch gekennzeichnet,**
**dass** das oder die Gebläse (43) als Saug- und/oder Druckgebläse ausgeführt sind.

## Claims

1. A straw chopper (8) for a combine harvester (1) having at least one threshing and/or axial separator (2) arranged in the longitudinal direction, wherein the straw chopper (8) provided with blades (32) and counterpart blades (33) is arranged beneath the straw delivery region of the axial separator (2) transversely relative to the direction of travel of the combine harvester (1), wherein the effective working width (34) of the straw chopper (8) is narrower than the housing width (35) of the combine harvester (1) and can be adapted to the respective outlet width (26) of the axial separator (2), wherein lateral guide plates (36, 37) are arranged between the delivery region (25) of the axial separator (2) and the straw chopper (8) within a straw discharge hood (27), **characterised in that** the lateral guide plates (36, 37) are pivotably mounted at the top side to pivot axes (41) facing in the longitudinal direction of the combine harvester (1).

2. A straw chopper according to claim 1 **characterised in that** the crop material (9) issuing from the delivery region (25) of the at least one axial separator (2) is guided between the guide plates (36, 37) into the receiving region (40) of the straw chopper (8) and wherein the guide plates (36, 37) are pivotably mounted to the machine frame (39) in positionally variable relationship.

3. A straw chopper according to one of the preceding claims **characterised in that** the delivery width (42) of the guide plates (36, 37) almost corresponds to the effective working width (34) of the straw chopper (8).

4. A straw chopper according to one of the preceding claims **characterised in that** a plurality of mutually juxtaposed axial separators (2) are associated with the combine harvester (1) and a straw chopper (8) is associated with each axial separator (2).

5. A straw chopper according to claim 4 **characterised in that** the straw choppers (8) are arranged on a common drive shaft (28).

6. A straw chopper according to one of the preceding claims **characterised in that** the drive shaft (28) of the straw chopper or choppers (8) is mounted in the machine frame (39) and one or more blowers (43) are associated with the one straw chopper (8) on both sides or with the plurality of straw choppers (8) at any location between the straw choppers (8).

7. A straw chopper according to claim 6 **characterised in that** the blower or blowers (43) is or are in the form of suction and/or pressure blowers.

## Revendications

1. Hache-paille (8) pour une moissonneuse-batteuse (1) comprenant au moins un dispositif de battage et/ou un séparateur axial (2), lequel hache-paille (8) pourvu de lames (32) et de contre-lames (33) est disposé transversalement à la direction de marche de la moissonneuse-batteuse (1) sous la zone de distribution de paille du séparateur axial (2), la largeur de travail active (34) du hache-paille (8) étant inférieure à la largeur de carter (35) de la moissonneuse-batteuse (1) et adaptable à la largeur de sortie (26) respective du séparateur axial (2), des tôles directrices latérales (36, 37) étant disposées à l'intérieur d'un capot de sortie de paille (27) entre la zone de distribution (25) du séparateur axial (2) et le hache-paille (8), **caractérisé en ce que** les tôles directrices latérales (36, 37) sont articulées en partie haute sur des axes de pivotement (41) orientés dans la direction longitudinale de la moissonneuse-batteuse (1).

2. Hache-paille selon la revendication 1, **caractérisé en ce que** le produit de récolte (9) sortant de la zone de distribution (25) dudit au moins un séparateur axial (2) est guidé entre les tôles directrices (36, 37) dans la zone de réception (40) du hache-paille (8), les tôles directrices (36, 37) étant articulées de manière variable en position sur le châssis de machine (39).

3. Hache-paille selon une des revendications précédentes, **caractérisé en ce que** la largeur de distribution (42) des tôles directrices (36, 37) correspond à peu près à la largeur de travail active (34) du hache-paille (8).

4. Hache-paille selon une des revendications précédentes, **caractérisé en ce que** plusieurs séparateurs axiaux (2) disposés côte à côte sont associés à la moissonneuse-batteuse (1), et un hache-paille (8) est associé à chaque séparateur axial (2).

5. Hache-paille selon la revendication 4, **caractérisé en ce que** les hache-paille (8) sont disposés sur un arbre d'entraînement commun (28).

6. Hache-paille selon une des revendications précédentes, **caractérisé en ce que** l'arbre d'entraînement (28) du ou des hache-paille (8) est monté dans le châssis de machine (39), et un ou plusieurs ventilateurs (43) sont associés audit un hache-paille (8) de chaque côté ou auxdits plusieurs hache-paille (8) à un emplacement quelconque entre les hache-paille (8).

7. Hache-paille selon la revendication 6, **caractérisé en ce que** le ou les ventilateurs (43) sont réalisés sous la forme de ventilateurs aspirants et/ou soufflants.
